# EUROPEAN PATENT APPLICATION

(11) **EP 4 438 558 A1**
(43) Date of publication of application: **02.10.2024**
(21) Application number: 22898650.1
(22) Date of filing: 25.11.2022
(51) Int. Cl.: C01F 7/30, C04B 35/10

(54) **ALUMINA POWDER**

(30) Priority: 26.11.2021 JP 2021192363
(71) Applicant: Sumitomo Chemical Company, Limited, Tokyo 103-6020 (JP)
(72) Inventor: KISHIDA, Hiroshi, Niihama-shi, Ehime 792-8521 (JP); SAKAMOTO, Syunsuke, Niihama-shi, Ehime 792-8521 (JP); MATSUO, Yoji, Niihama-shi, Ehime 792-8521 (JP)
(74) Representative: Cabinet Beau de Loménie
(86) International application number: PCT/JP2022/043518
(87) International publication number: WO 2023/095868

(57) **Abstract**

Disclosed is alumina powder having a relative standard deviation of a volume-based crystallite diameter distribution of 0.25 to 0.80, as determined by analyzing an X-ray diffraction peak by a fundamental parameter method.

## Description

### Technical Field

The present disclosure relates to alumina powder, in particular, alumina powder that can produce a sintered body excellent in plasma resistance.

### Background Art

In the process of producing a semiconductor component, an oxide insulating film formed on a Si wafer is partially removed with corrosive gas and plasma to pattern a circuit. At this time, a constituent member (e.g., electrostatic chuck) of a semiconductor producing apparatus is exposed to corrosive gas and plasma. As a result, there is possibly a problem of generation of particles of the order of several micrometers from the constituent member, leading to disconnection of the circuit formed on the Si wafer (due to the deposition of the particles, a part of the circuit is not formed). In order to prevent generation of the particles, a constituent member excellent in plasma resistance has been considered (for example, Non Patent Literature 1). Non Patent Literature 1 discloses that a ceramic film body produced by the AD (aerosol deposition) method has more excellent plasma resistance than a conventional ceramic sintered body.

### Citation List

### Non Patent Literature

Non Patent Literature 1: "Development of low-dusting member excellent in plasma resistance", Kiyohara et.al., Bulletin of the Ceramic Society of Japan, 50 (2015) No. 6, The Ceramic Society of Japan

### Summary of Invention

### Technical Problem

The AD method is an excellent approach that can obtain a compact ceramic film without heating but has a problem in terms of continuous production because the facility and exhaust ventilation of a chamber are required.

The present inventors diligently studied the conditions of alumina powder to produce a ceramic sintered body excellent in plasma resistance, in particular an alumina sintered body by utilizing the conventional sintered techniques. In order to obtain such an alumina sintered body, use of an appropriate alumina powder is required. Therefore, an object of an embodiment of the present invention is to provide alumina powder that can produce an alumina sintered body excellent in plasma resistance.

### Solution to Problem

An aspect 1 of the present invention is:
alumina powder having a relative standard deviation of a volume-based crystallite diameter distribution of 0.25 to 0.80, as determined by analyzing an X-ray diffraction peak by a fundamental parameter method.

An aspect 2 of the present invention is:
the alumina powder according to the aspect 1, wherein an alumina particle constituting the alumina powder has an average roundness of 0.71 to 0.86.

An aspect 3 of the present invention is:
the alumina powder according to the aspect 1 or 2, wherein a volume-based crystallite diameter is from 650 to 1,400 Å.

### Advantageous Effects of Invention

Use of alumina powder according to an embodiment of the present invention can produce an alumina sintered body excellent in plasma resistance.

### Description of Embodiments

The present inventors have found that selection of alumina powder as a raw material is important in order to improve plasma resistance of an alumina sintered body. As a result of further diligent studies based on the finding, the present inventors have found for the first time that the plasma resistance of the alumina sintered body can be improved by controlling a relative standard deviation of a crystallite size of the alumina powder, in particular, of a volume-based crystallite diameter distribution ("distribution RSD: Relative Standard Deviation", which may be simply referred to as "distribution RSD") between 0.25 and 0.80, and completed alumina powder that can produce an alumina sintered body excellent in plasma resistance based on this finding.

The alumina powder according to an embodiment of the present invention will be described.

The alumina powder according to an embodiment has a relative standard deviation of a volume-based crystallite diameter distribution (distribution RSD) of 0.25 to 0.80, as determined by analyzing an X-ray diffraction peak by a fundamental parameter (FP) method.

Use of the fundamental parameter (FP) method makes it possible to determine the distribution RSD based on an X-ray diffraction pattern. Specification of the distribution RSD using the FP method is performed by analysis software. For example, a commercially available analysis software (manufactured by Rigaku Corporation, integrated powder X-ray analysis software SmartLab Studio II) is used to analyze the diffraction profiles obtained from the powder X-ray diffraction measurement. The analysis conditions (setting of the peak profiling) are as follows: peak shape: FP (Fundamental Parameter) method, crystallite size distribution type: logarithmic normal distribution.

The powder X-ray diffraction of the alumina powder can be done using, for example, a commercially available X-ray diffraction apparatus (manufactured by Rigaku Corporation, SmartLab). The source of X-ray is not limited, but, for example, CuK α is used. The measurement range of the angle of diffraction 2θ is, for example, 10° or more and 90° or less.

As the X-ray diffraction peak used for analysis, in the case of α-alumina, for example, the peak of the (113) face at a high angle side and with a high inspection intensity (the peak of 2θ = 43.0 ± 1° when the source of X-ray is CuK α) is used.

The alumina powder with the distribution RSD determined by the above method being within a range from 0.25 to 0.80 is suitable for producing an alumina sintered body excellent in plasma resistance. The reason for this is uncertain, but the distribution RSD of 0.25 to 0.80 means that the volume-based crystallite diameters of the alumina powder are relatively matched. It is believed that the matching of the volume-based crystallite diameters contributes to improvement of the plasma resistance.

Here, in the present specification, the volume-based crystallite diameter may be referred to as "volume average diameter" or "crystallite diameter".

The smaller the distribution RSD, the more uniform the crystallite diameter. Since it is not always easy to adjust the distribution RSD to less than 0.25, the lower limit is set to 0.25.

The distribution RSD is preferably 0.27 to 0.72, more preferably 0.30 to 0.64, and particularly preferably 0.34 to 0.57.

An average roundness of the alumina particles constituting the alumina powder is preferably from 0.71 to 0.86. When the average roundness falls within this range, the plasma resistance can be further improved.

The average roundness of the alumina particles is more preferably 0.75 to 0.85, and particularly preferably 0.79 to 0.85.

The average roundness of the alumina particles is calculated in the following procedure.

The SEM image of alumina particles is obtained. The alumina particles are fixed on a piece of carbon tape. The SEM image can be obtained at a given elevated voltage by a scanning electron microscope (for example, scanning electron microscope "S-5500" manufactured by Hitachi High-Tech Corporation).

The obtained SEM image is subjected to the binary coded processing using image processing software (for example, free software ImageJ (https://fiji.sc/)). An area of an alumina particle defined by an outline ("an area" in the equation (1)) and, when the shape of the alumina particle is substantially an ellipse, a major axis diameter of the ellipse ("major axis diameter" in the equation (1)) are each calculated.

The roundness of one alumina particle is calculated by the following equation (1). The roundness of one alumina particle = 4 × area / [π × (major axis diameter)2]

At least 25 alumina particles are calculated respectively for the roundness of one particle. The average of the roundness values is considered as "average roundness of the alumina particle".

As seen from the equation (1), as the "roundness of one alumina particle" is closer to 1, the shape of the alumina particle in the SEM image is closer to a perfect circle. Therefore, as the average roundness of the alumina particle is closer to 1, the shape of the alumina particle constituting the alumina powder in the SEM image is closer to a perfect circle.

The volume-based crystallite diameter of the alumina powder is preferably from 650 to 1,400 Å. When the volume-based crystallite diameter falls within this range, the plasma resistance can be further improved.

As described in the distribution RSD, the crystallite diameter is determined by analyzing a powder X-ray diffraction profile using a commercially available analysis software (for example, integrated powder X-ray analysis software SmartLab Studio II, manufactured by Rigaku Corporation).

The crystallite diameter is more preferably 800 to 1,350 Å, still more preferably 820 to 1,350 Å, and particularly preferably 820 to 950 Å.

From the viewpoint of obtaining excellent plasma resistance, the alumina powder mainly includes α-alumina, and may be a mixture further including any one or more of γ-alumina, η-alumina, θ-alumina, δ-alumina, boehmite, and pseudoboehmite. The content of α-alumina in the alumina powder is preferably 90% by weight or more, more preferably 99% by weight or more, and most preferably 99.9% by weight or more.

The alumina powder is substantially formed of alumina only, but may include unavoidable impurities such as Fe, Si, and/or Na, introduced depending on the circumstances of raw materials, materials, production facilities, and the like. The unavoidable impurities may be included unless the plasma resistance of the alumina material is significantly deteriorated, and a commonly acceptable content thereof is 100 ppm or less in total.

The content is preferably 10 ppm or less in total. The content of Fe, Si, Na, and the like can be measured by emission spectroscopy.

One example of a production method that can produce the alumina powder of the present embodiment will be described.

A method of producing the alumina powder according to an embodiment includes:
a step of preparing a seed crystal slurry in which seed crystals are dispersed;
a step of mixing the seed crystal slurry and aluminum alkoxide to obtain an aluminum hydroxide slurry; and
a step of drying and firing the aluminum hydroxide slurry to obtain alumina powder.
Further, the method of producing the alumina powder may include a step of pulverizing the obtained alumina powder.
The method may include a step of chelating aluminum alkoxide prior to the step of obtaining the aluminum hydroxide slurry.

Each step will be described in detail.

### [1. Step of preparing seed crystal slurry]

After alumina particles (raw material of seed crystals) are dispersed in water, the wet pulverization is performed with a ball mill. Then, a centrifugal treatment is performed using a cooling centrifugal separator (for example, manufactured by himac: CR7N) to remove precipitates. As a result, a seed crystal slurry in which seed crystals are dispersed is obtained.

The seed crystals are preferably α-alumina. Use of the seed crystals of α-alumina allows conversion of alumina into α-alumina upon firing at a low temperature in a firing step that will be described later.

The particle diameter of the seed crystal is preferably smaller, and a seed crystal having a particle diameter of 0.01 µm to 0.2 µm is generally used.

The BET specific surface area of the seed crystal contributes to the crystallite diameter of the finally obtained alumina powder. In order to satisfy the distribution RSD of the alumina powder within the range according to the embodiment (from 0.25 to 0.80) and/or in order to satisfy the crystallite diameter within the preferable range (from 650 to 1,400 Å), the BET specific surface area of the seed crystal is preferably 30 m²/g or more, more preferably 40 m²/g or more, still more preferably 50 m²/g or more, and particularly preferably 70 m²/g or more.

The BET specific surface area is determined by the nitrogen adsorption method one-point method according to the method defined in JIS-Z-8830:2013 "Determination of the specific surface area of powders (solids) by gas adsorption-BET method".

The content of the seed crystal in the seed crystal slurry is not particularly limited as long as the obtained seed crystal slurry has an appropriate fluidity. For example, the content of the seed crystal in the seed crystal slurry is 5% by mass to 40% by mass.

### [2. Step of chelating aluminum alkoxide]

The method may optionally include a step of chelating aluminum alkoxide. In this step, aluminum alkoxide is chelated by a chelating agent. Since the chelation coordinates a bulky ligand to cause steric hindrance, the chelated aluminum alkoxide can more effectively prevent the condensation reaction of aluminum alkoxide caused at the hydrolysis that will be described later, compared to aluminum alkoxide that is not chelated. Prevention of the condensation reaction makes it easier to obtain fine particles of aluminum hydroxide.

As the aluminum alkoxide, for example, aluminum ethoxide, aluminum n-propoxide, aluminum isopropoxide, aluminum n-butoxide, aluminum sec-butoxide, and aluminum t-butoxide can be used.

As the chelating agent, for example, ethyl acetoacetate, triethanolamine (TEA), and ethylenediamine (EDA) can be used.

### [3. Step of mixing the seed crystal slurry and the (optionally chelated) aluminum alkoxide to obtain aluminum hydroxide slurry]

The seed crystal slurry and the (optionally chelated) aluminum alkoxide are continuously supplied to a stirrer for mixing. When this mixture is subjected to shearing and stirring at a high-speed rotation in a stirrer, a hydrolytic reaction occurs between water in the seed crystal slurry and aluminum alkoxide to provide a slurry including aluminum hydroxide particles as hydrolyzate (aluminum hydroxide slurry).

The amounts of the seed crystal slurry and the (optionally chelated) aluminum alkoxide supplied are preferably controlled so that the content of the seed crystal in the mixture becomes appropriate. In particular, the content of the seed crystal contributes to the crystallite diameter of the finally obtained alumina powder. In order to satisfy the distribution RSD of the alumina powder within the range according to the embodiment (from 0.25 to 0.80) and/or in order to satisfy the crystallite diameter within the preferable range (from 650 to 1,400 Å), regarding the preferable content of the seed crystal, the aluminum component in the seed crystal is 1 part by mass or more, preferably 2 parts by mass or more, and 50 parts by mass or less, preferably 40 parts by mass or less, and particularly preferably 30 parts by mass or less, relative to the total amount (100 parts by mass) of the aluminum component in the mixture, in terms of oxide of the metal component in the mixture (the aluminum alkoxide and the aluminum component contained in the seed crystal).

The amounts of the seed crystal slurry and the (optionally chelated) aluminum alkoxide supplied are preferably controlled so that the blend ratio of (water contained in the seed crystal slurry) / ((optionally chelated) aluminum alkoxide) is in a range from about 1.5 to about 6.0 by molar ratio.

One characteristic of this step is that the mixture is subjected to shearing and stirring at a high-speed rotation. In the present specification, the term "shearing and stirring at a high-speed rotation" is stirring performed by mechanical energy such as a shearing force, a pressure fluctuation, cavitation, an impact force, and potential core generated between a turbine (rotor) and a stator (screen) when the clearance between the turbine (rotor) and stator (screen) is small (e.g., 2 mm or less) and the turbine (rotor) rotates at a high speed (e.g., peripheral speed of about 1 m/sec to about 40 m/sec).

Examples of the stirrer that can perform shearing and stirring at a high-speed rotation include machine types such as T.K homomixer (manufactured by Tokushu Kika Kogyo Co., Ltd.), CLEARMIX (manufactured by M Technique Co., Ltd.), polytron homogenizer, MEGATRON homogenizer (KINEMATICA), and SUPRATON (manufactured by Tsukishima Kikai Co., Ltd.).

In the shearing and stirring at a high-speed rotation, the number of revolutions of the turbine (rotor) is 3,000 rpm to 21,500 rpm, and preferably 8,000 rpm to 15,000 rpm, for example, 10,000 rpm. When the number of revolutions falls within the aforementioned range, two liquids of water in the seed crystal slurry and the (chelated) aluminum alkoxide can be sufficiently mixed, and aggregation of the aluminum hydroxide in the generated aluminum hydroxide slurry can be prevented. This makes it possible to obtain the aluminum hydroxide slurry containing fine particles of the aluminum hydroxide. Moreover, the seed crystal can be uniformly dispersed in the aluminum hydroxide slurry.

Aluminum alkoxide can be hydrolyzed using a continuous reaction apparatus. As the continuous reaction apparatus, a tank continuous type, a pipeline continuous type, and the like are applicable. The tank continuous type is a method in which the seed crystal slurry and the (optionally chelated) aluminum alkoxide are continuously supplied into a tank equipped with a stirrer that enables shearing at a high-speed rotation and the aluminum alkoxide are hydrolyzed (and aluminum hydroxide particles are formed) while the same amount of the liquid as the amount of the supplied liquid is discharged. The pipeline continuous type is a method in which the seed crystal slurry and the (optionally chelated) aluminum alkoxide are continuously supplied to a stirrer incorporated into the line that enables shearing at a high-speed rotation. These continuous reaction apparatuses are extremely productive and can achieve homogenization of the generation conditions of the aluminum hydroxide particles, compared to a batch-type reaction apparatus. Therefore, it is possible to obtain an aluminum hydroxide slurry that includes aluminum hydroxide having a uniform particle size distribution without coarse aggregated particles.

### [4. Step of drying and firing the aluminum hydroxide slurry to obtain alumina powder]

An aluminum hydroxide slurry is dried by a known method, and the obtained aluminum hydroxide is fired in a firing furnace to obtain alumina powder.

Firing is performed generally at 800°C or more and preferably at 900°C or more, and is performed generally at 1,000°C or less, preferably at 980°C or less, and more preferably at 960°C or less. When firing is performed at more than 1,000°C, it is less likely to obtain fine particles of the alumina powder. Moreover, when firing is performed at less than 800°C, the content of α-phase in the alumina powder tends to be low.

Firing may be performed in air or may be performed in an inert gas such as nitrogen gas or argon gas. Firing is effectively performed while a high-water vapor partial pressure in an atmosphere is maintained. Particularly, in the case where a step of chelating aluminum alkoxide is not included, when firing is performed at an atmosphere having a high-water vapor partial pressure (i.e., atmosphere having a high dew point), the α-phase can be obtained at a low firing temperature. When a step of chelating aluminum alkoxide is included, the α-phase can be obtained in an atmosphere having a low-water vapor partial pressure (i.e., atmosphere having a low dew point) and at a low firing temperature.

Firing can be performed using a typical firing furnace such as a tubular electric furnace, a box-type electric furnace, a tunnel furnace, a far-infrared furnace, a microwave heating furnace, a shaft furnace, a reverberatory furnace, a rotary furnace, a roller-hearth furnace, or a gas (LNG, LPG) furnace. Firing may be performed batchwise or continuously. In addition, firing may be performed statically or in a flow manner.

As a method of controlling a dew point at firing, for example, an electric furnace using a heating source of electric energy as a firing furnace, and a method of spraying water in dry air introduced into a furnace or a method of introducing steam into a furnace when a tubular furnace is used are effective. When a gas combustion furnace is used as a firing furnace, a method of introducing, into a furnace, moisture generated by combusting fuel such as gas or petroleum is effective, and additionally introducing steam is more effective.

The dew point is determined using the amount of water vapor from a conversion table or determined from an equation using a water vapor pressure. The water vapor pressure and the amount of water vapor (absolute humidity) can be determined from a saturated water vapor pressure or an amount of saturated water vapor and relative humidity, respectively. Note that, the saturated water vapor pressure can be calculated from the equation of Tetens.

If the step of chelating aluminum alkoxide is not included, the dew point in a furnace is preferably controlled to 30°C or more, more preferably controlled to 40°C or more, and particularly controlled to 50°C or more.

As described above, alumina powder having a distribution RSD of 0.25 to 0.80 can be obtained.

Control of the BET specific surface area of the seed crystal and/or control of the content of the seed crystal in the aluminum hydroxide slurry can provide an alumina powder having a crystallite diameter of 650 to 1,400 Å.

### [5. Step of pulverizing the obtained alumina powder]

The alumina powder according to the embodiment of the present invention can be obtained by the above-described production method, but the alumina powder may be further pulverized. A medium pulverizing machine such as a vibration mill, a ball mill, or a jet mill can be used for pulverizing the alumina powder. The alumina powder obtained after pulverizing may be classified.

Generally, alumina powder for sintering is sintered after the alumina powder is pulverized to match the particle size thereof, followed by molding. However, the alumina powder according to the embodiment tends to have a large distribution RSD when pulverized. Therefore, it is preferable not to pulverize the alumina powder according to the embodiment in order to have a low distribution RSD.

In the embodiment, the alumina powder according to the present disclosure has been described as a suitable raw material for producing a constituent member of a semiconductor producing apparatus such as an electrostatic chuck. Additionally the alumina powder according to the present disclosure can be used for a raw material such as a coating material, a sprayed film, an oxide sintered body, a composite oxide sintered body, a shaft bearing, a bearing, ceramics beads, a filler for semiconductor sealing resin, a heat radiation filler, an insulating filler, a light reflection material, a light scattering material, a blast material, abrasive grains, a biomaterial, or a dental material.

### Examples

### (Example 1)

A method of producing the alumina powder sample (sample No. 1) according to Example 1 will be described.

### [Preparation of seed crystal (α-alumina) slurry]

Alumina particles (raw material of a seed crystal) were dispersed in water, followed by wet pulverization using a ball mill. Then, a centrifugal treatment was performed using a cooling centrifugal separator (manufactured by himac: CR7N) at the number of revolutions of 4,000 rpm for 30 minutes, to remove precipitates. As a result, a seed crystal slurry in which seed crystals were dispersed was obtained.

The BET specific surface area of the seed crystal in the obtained seed crystal slurry was measured. First, the moisture in the seed crystal slurry was evaporated to obtain seed crystals, and the BET specific surface area was determined by the nitrogen adsorption method one-point method according to the method defined in JIS-Z-8830:2013 "Determination of the specific surface area of powders (solids) by gas adsorption-BET method". The measurement results of the BET specific surface areas of the seed crystals are described in Table 1.

### [Adjustment of chelated aluminum isopropoxide]

The aluminum isopropoxide was chelated to adjust a chelated aluminum isopropoxide (described as "Yes" in "Presence of chelation" in Table 1).

The aluminum isopropoxide and ethyl acetoacetate (chelating agent) were mixed so that the molar ratio was 100:3 to obtain 3 mol% of chelated aluminum isopropoxide.

### [Production of α-alumina powder]

The chelated aluminum isopropoxide and the seed crystal slurry were mixed and hydrolyzed at the number of revolutions of 10,000 rpm using a precision emulsification dispersion machine CLEARMIX CLM-2.2S (manufactured by M Technique Co., Ltd.). As a result, an aluminum hydroxide slurry was obtained.

The blend ratio between the chelated aluminum isopropoxide and the seed crystal slurry was determined so that the ratio of (water contained in seed crystal slurry) / (chelated aluminum isopropoxide) was 2.7/1 (molar ratio). When they are combined at such a blend ratio, the aluminum hydroxide slurry contains 2 parts by mass of the aluminum component contained in the seed crystal relative to the total amount of 100 parts by mass of the aluminum component contained in the seed crystal and the (chelated) aluminum isopropoxide in terms of the oxide of the metal component. The content of each of the aluminum components (parts by mass) was calculated assuming that all the aluminum isopropoxide used would become alumina.

The obtained aluminum hydroxide slurry was dried at 150°C to obtain aluminum hydroxide particles. The aluminum hydroxide particles were charged into a crucible formed of alumina and were fired in a box-type electric furnace. Regarding the firing conditions, the temperature was elevated to a firing temperature of 985°C at an elevated temperature rate of 200°C/hour, and was maintained at that firing temperature for 4 hours.

### (Examples 2 to 6)

In the samples of Examples 2 and 3 (sample Nos. 2 and 3), as described in Table 1, the BET specific surface area of the seed crystal, the number of parts of the added seed crystal, and the firing temperature of the aluminum hydroxide particles were changed.

In the samples of Examples 4, 5, and 6 (sample Nos. 4, 5, and 6), as described in Table 1, the BET specific surface area of the seed crystal, the number of parts of the added seed crystal, and the firing temperature of the aluminum hydroxide particles were changed. Moreover, pulverization using a ball mill was performed after firing.

### (Examples 7 to 12)

In the samples of Examples 7, 8, and 9 (sample Nos. 12, 13, and 14), the aluminum isopropoxide was used without chelation (described as "No" in "Presence of chelation" in Table 1). As described in Table 1, the BET specific surface area of the seed crystal, the number of parts of the added seed crystal, and the firing temperature of the aluminum hydroxide particles were changed. Instead of the box-type electric furnace, a gas furnace was used for firing the aluminum hydroxide particles.

In the samples of Examples 10, 11, and 12 (sample Nos. 15, 16, and 17), as described in Table 1, the aluminum isopropoxide was used without chelation, the BET specific surface area of the seed crystal, the number of parts of the added seed crystal, and the firing temperature of the aluminum hydroxide particles were changed, and firing using a gas furnace and pulverization using a ball mill after the firing were performed.

### (Comparative Examples 1 to 5)

In the sample of Comparative Example 1 (sample No. 7), as described in Table 1, the seed crystal was not added, the firing temperature of the aluminum hydroxide particles was changed, and pulverization using a ball mill was performed after the firing.

The samples of Comparative Examples 2 to 5 (sample Nos. 8 to 11) were commercially available alumina with high purity manufactured by SUMITOMO CHEMICAL COMPANY, LIMITED.

The production conditions of the respective samples of Examples 1 to 12 and Comparative Example 1 were described in Table 1. The kinds of the respective samples of Comparative Examples 2 to 5 were described in Table 2. The measurement results and the calculation results of the respective samples of Examples 1 to 12 and Comparative Examples 1 to 5 were described in Tables 3 and 4, respectively. Here, the underlined values in Table 3 indicate that they are outside the range or the preferable range of the embodiment of the present invention.

**[Table 1]**

| Sample No. | Presence of chelation | BET specific surface area of seed crystals (m²/g) | Number of parts of added seed crystals (parts by mass) | Firing furnace | Firing temperature, firing time | Dew point at firing | Pulverization | |
|---|---|---|---|---|---|---|---|---|
| 1 | Yes | 40 | 2 | Electric furnace | 985°C, 4 hours | 25°C | No | Example 1 |
| 2 | Yes | 50 | 2 | Electric furnace | 970°C, 4 hours | 25°C | No | Example 2 |
| 3 | Yes | 70 | 10 | Electric furnace | 970°C, 4 hours | 25°C | No | Example 3 |
| 4 | Yes | 40 | 5.6 | Electric furnace | 975°C, 4 hours | 25°C | Yes | Example 4 |
| 5 | Yes | 40 | 10 | Electric furnace | 970°C, 4 hours | 25°C | Yes | Example 5 |
| 6 | Yes | 70 | 10 | Electric furnace | 970°C, 4 hours | 25°C | Yes | Example 6 |
| 7 | Yes | - | 0 | Electric furnace | 1120°C, 4 hours | 25°C | Yes | Comparative Example 1 |
| 12 | No | 40 | 10 | Gas furnace | 965°C, 4 hours | 40°C | No | Example 7 |
| 13 | No | 40 | 15 | Gas furnace | 965°C, 4 hours | 40°C | No | Example 8 |
| 14 | No | 40 | 20 | Gas furnace | 965°C, 4 hours | 40°C | No | Example 9 |
| 15 | No | 40 | 10 | Gas furnace | 965°C, 4 hours | 40°C | Yes | Example 10 |
| 16 | No | 40 | 15 | Gas furnace | 965°C, 4 hours | 40°C | Yes | Example 11 |
| 17 | No | 40 | 20 | Gas furnace | 965°C, 4 hours | 40°C | Yes | Example 12 |

**[Table 2]**

| Sample No. | Alumina powder | Manufacturer | |
|---|---|---|---|
| 8 | AKP-20 | SUMITOMO CHEMICAL | Comparative Example 2 |
| 9 | AKP-53 | SUMITOMO CHEMICAL | Comparative Example 3 |
| 10 | AKP-700 | SUMITOMO CHEMICAL | Comparative Example 4 |
| 11 | AA-03 | SUMITOMO CHEMICAL | Comparative Example 5 |

**[Table 3]**

| Sample No. | Average roundness | α-alumina powder | | |
|---|---|---|---|---|
| | | 20=43 deg. (113) face | | |
| | | Volume average diameter (Å) | Distribution RSD | |
| 1 | 0.74 | 1347 | 0.32 | Example 1 |
| 2 | 0.78 | 1252 | 0.36 | Example 2 |
| 3 | 0.84 | 877 | 0.34 | Example 3 |
| 4 | 0.83 | 1000 | 0.64 | Example 4 |
| 5 | 0.81 | 930 | 0.54 | Example 5 |
| 6 | 0.84 | 810 | 0.43 | Example 6 |
| 7 | 0.78 | 782 | 0.96 | Comparative Example 1 |
| 8 | 0.70 | 1275 | 1.07 | Comparative Example 2 |
| 9 | 0.67 | 867 | 0.89 | Comparative Example 3 |
| 10 | 0.70 | 600 | 1.02 | Comparative Example 4 |
| 11 | 0.87 | 1450 | 0.22 | Comparative Example 5 |
| 12 | 0.83 | 941 | 0.35 | Example 7 |
| 13 | 0.83 | 914 | 0.39 | Example 8 |
| 14 | 0.83 | 910 | 0.38 | Example 9 |
| 15 | 0.83 | 907 | 0.49 | Example 10 |
| 16 | 0.83 | 888 | 0.51 | Example 11 |
| 17 | 0.83 | 870 | 0.51 | Example 12 |

### [Calculation of volume-based crystallite diameter (volume average diameter), and relative standard deviation of volume-based crystallite diameter distribution (distribution RSD)]

The volume-based crystallite diameter (volume average diameter) and the relative standard deviation of the volume-based crystallite diameter distribution (distribution RSD) of the α-alumina powder were determined by the FP method.

The CuK α was used for a radiation source, and the powder X-ray diffraction measurement of the α-alumina powder was performed within the measurement range of the angle of diffraction 2θ = 10° to 90°. The X-ray diffraction apparatus used was SmartLab manufactured by Rigaku Corporation. The diffraction profile obtained by the powder X-ray diffraction measurement was analyzed using analysis software (manufactured by Rigaku Corporation, integrated powder X-ray analysis software SmartLab Studio II). The analysis conditions (setting of the peak profiling) were the peak shape: FP (Fundamental Parameter) method, and the crystallite size distribution type: logarithmic normal distribution. When the diffraction peak within the range of 2θ = 43.0 ± 1° that corresponded to the (113) face of α-alumina was selected and analysis, the relative standard deviation of the volume-based crystallite diameter distribution (distribution RSD) was calculated.

From the crystallite size distribution view of the analysis software, the volume average diameter was set to the horizontal axis and the probability density function of the crystallite with respect to the crystallite diameter was set to the longitudinal axis, and the crystallite diameter distribution function curve having a total area of 1 was drawn.

The values of the volume average diameter and the distribution RSD of each sample were described in Table 3.

### [Production of sintered molded body]

The α-alumina powder was used to prepare a sintered molded body.

An appropriate amount of α-alumina powder was subjected to uniaxial press molding at 30 MPa using a forming die of φ20 mm, and pressure of 98 MPa was applied thereto using an isostatic press, to obtain a molded body having a surface dimension of φ20 mm and a thickness of 5 to 10 mm. The molded body was charged into a crucible formed of alumina and was placed in a box-type electric furnace. The temperature was elevated to a firing temperature of 1,450°C at an elevated temperature rate of 200°C/hour. The temperature was maintained at that firing temperature for 2 hours, to sinter the molded body. Then, a sintered molded body was obtained. The surface of the obtained sintered molded body was polished to prepare a sintered body sample for measurement.

### [Evaluation of plasma resistance]

After the sintered body sample was exposed to plasma, the surface roughness was evaluated, to evaluate the plasma resistance.

The half surface of the surface of the sintered body sample was masked with a piece of tape and was placed in a plasma etching apparatus (manufactured by Samco Inc.: RIE-400iPBT). The surface of the sintered body sample was exposed to plasma at an output of 1 kW for 5 hours in a mixed ambient gas of CF₄, SF₆, and Ar.

The surface roughness of the surface exposed to plasma (plasma-exposed surface) was measured and determined for the surface roughness Sa of the surface using a laser microscope (manufactured by KEYENCE CORPORATION: VK-X3000) under the following conditions: lens magnification of 50 folds, pitch of 0.1 µm, and the measurement range of 214.5 µm (768 pix) (vertical) and 286.1 µm (1,024 pix) (horizontal). Different three portions of each sample were measured, and an average value thereof was considered as the surface roughness Sa_{EX} of the plasma-exposed surface.

In addition, the surface obtained after the piece of tape was peeled (referred to as "mask surface") was also measured for the surface roughness Sa of the surface under the same measurement range and measurement conditions. Different three portions of each sample were measured, and an average value thereof was considered as the surface roughness Sa_{MK} of the mask surface.

A difference ΔSa (ΔSa = Sa_{EX} - Sa_{MK}) between the surface roughness Sa_{EX} of the plasma-exposed surface and the surface roughness Sa_{MK} of the mask surface was determined.

The surface roughness Sa_{EX} of the plasma-exposed surface, the surface roughness Sa_{MK} of the mask surface, and the difference ΔSa thereof were described in Table 2.

**[Table 4]**

| Sample No. | Sintered body sample (evaluation of plasma resistance) | | | |
|---|---|---|---|---|
| | Surface roughness Sa_{EX} of plasma-exposed surface (µm) | Surface roughness Sa_{MK} of mask surface (µm) | Difference between surface roughnesses ΔSa (µm) | |
| 1 | 0.30 | 0.03 | 0.27 | Example 1 |
| 2 | 0.34 | 0.04 | 0.30 | Example 2 |
| 3 | 0.28 | 0.04 | 0.24 | Example 3 |
| 4 | 0.33 | 0.02 | 0.31 | Example 4 |
| 5 | 0.23 | 0.02 | 0.21 | Example 5 |
| 6 | 0.34 | 0.01 | 0.33 | Example 6 |
| 7 | 0.45 | 0.06 | 0.39 | Comparative Example 1 |
| 8 | 0.50 | 0.02 | 0.48 | Comparative Example 2 |
| 9 | 0.71 | 0.06 | 0.65 | Comparative Example 3 |
| 10 | 0.51 | 0.02 | 0.49 | Comparative Example 4 |
| 11 | 0.52 | 0.05 | 0.47 | Comparative Example 5 |
| 12 | 0.18 | 0.02 | 0.16 | Example 7 |
| 13 | 0.19 | 0.02 | 0.17 | Example 8 |
| 14 | 0.19 | 0.02 | 0.17 | Example 9 |
| 15 | 0.27 | 0.02 | 0.25 | Example 10 |
| 16 | 0.33 | 0.02 | 0.31 | Example 11 |
| 17 | 0.36 | 0.01 | 0.35 | Example 12 |

The samples of Examples 1 to 12 (sample Nos. 1 to 6 and 12 to 17) were alumina powders prepared by adding an appropriate amount of the seed crystal having appropriate physical properties (particularly, BET specific surface area). Therefore, the distribution RSDs of the obtained alumina powders were within the range of the embodiment. It was found that the sintered molded bodies prepared using these alumina powders have a small difference ΔSa between the surface roughness Sa_{EX} of the plasma-exposed surface and the surface roughness Sa_{MK} of the mask surface and have high plasma resistance.

On the other hand, the sample of Comparative Example 1 (sample No. 7) was alumina powder prepared without adding the seed crystal. Therefore, the distribution RSD of the obtained alumina powder was outside the range of the embodiment.

The samples of Comparative Examples 2 to 5 (sample Nos. 8 to 11) were commercially available alumina powders provided for comparison. Therefore, the distribution RSDs of the obtained alumina powders were outside the range of the embodiment.

It was found that the sintered molded bodies prepared using these alumina powders have a large difference ΔSa between the surface roughness Sa_{EX} of the plasma-exposed surface and the surface roughness Sa_{MK} of the mask surface and have poor plasma resistance.

The present application claims priority to the Japanese patent application, Japanese Patent Application No. 2021-192363 filed on November 26, 2021, as the basic application. Japanese Patent Application No. 2021-192363 is incorporated herein by reference.

## Claims

1. Alumina powder having a relative standard deviation of a volume-based crystallite diameter distribution of 0.25 to 0.80, as determined by analyzing X-ray diffraction peaks by a fundamental parameter method.

2. The alumina powder according to claim 1, wherein alumina particles constituting the alumina powder have an average roundness of 0.71 to 0.86.

3. The alumina powder according to claim 1 or 2, wherein a volume-based crystallite diameter is from 650 to 1,400 Å.
